## Europäisches Patentamt

## European Patent Office

## Office européen des brevets

(19)

(11) Veröffentlichungsnummer: **0 136 979**
**B1**

(12) **EUROPÄISCHE PATENTSCHRIFT**

(45) Veröffentlichungstag der Patentschrift:
**26.10.88**

(51) Int. Cl.⁴: **G 03 B 27/46**, G 03 B 27/30

(21) Anmeldenummer: **84810463.4**

(22) Anmeldetag: **24.09.84**

(54) **Laboreinrichtung zur Herstellung von fotographischen Kopien.**

(30) Priorität: **30.09.83 CH 5304/83**

(43) Veröffentlichungstag der Anmeldung:
**10.04.85 Patentblatt 85/15**

(45) Bekanntmachung des Hinweises auf die Patenterteilung:
**26.10.88 Patentblatt 88/43**

(84) Benannte Vertragsstaaten:
**CH DE FR GB IT LI**

(56) Entgegenhaltungen:
**GB - A - 330 550**
**US - A - 1 682 931**
**US - A - 2 580 779**
**US - A - 4 185 912**

(73) Patentinhaber: **GRETAG Aktiengesellschaft,**
**Althardstrasse 70, CH-8105 Regensdorf (CH)**

(72) Erfinder: **Dech, Rudolf, Chilweg 34,**
**CH-8165 Oberweningen (CH)**

(74) Vertreter: **Pirner, Wilhelm et al, Patentabteilung der**
**CIBA-GEIGY AG Postfach, CH-4002 Basel (CH)**

ACTORUM AG

## Beschreibung

Die Erfindung betrifft eine Laboreinrichtung zur Herstellung von fotographischen Kopien gemäss Oberbegriff des Patentanspruchs 1.

Durch die Erfindung soll eine solche Laboreinrichtung hinsichtlich Kompaktheit ihres Aufbaus sowie gleichzeitig einfacher und zweckmässiger Bedienbarkeit optimiert werden.

Die erfindungsgemässe Laboreinrichtung ist im Patentanspruch 1 beschrieben. Bevorzugte Ausführungsformen und besonders zweckmässige Ausgestaltungen ergeben sich aus den abhängigen Ansprüchen.

Im folgenden wird die Erfindung anhand eines in der Zeichnung dargestellten Ausführungsbeispiels näher erläutert. Es zeigen:

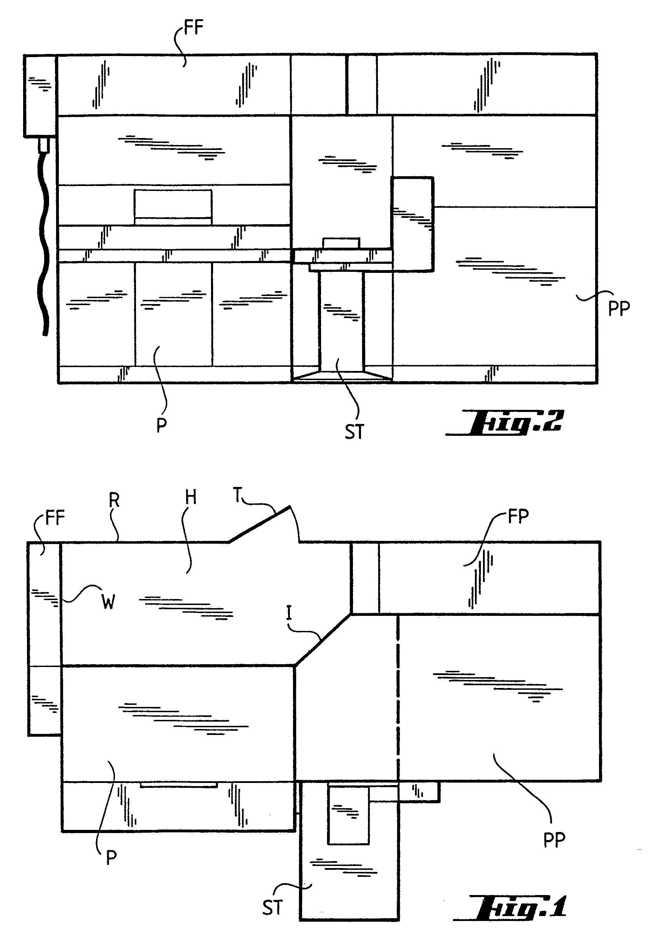

Fig. 1 eine schematische Darstellung einer erfindungsgemässen Laboreinrichtung im Grundriss,

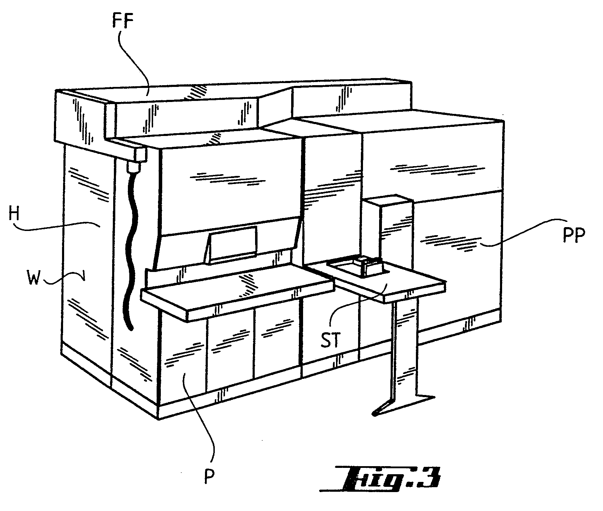

Fig. 2 eine entsprechende Vorderansicht (Aufriss),

Fig. 3 eine perspektivische Schrägansicht,

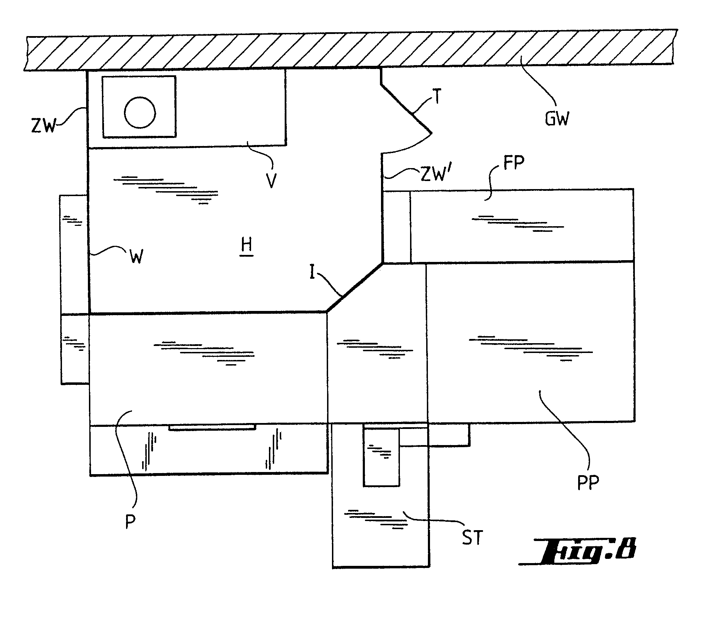

Fig. 4–7 Skizzen zur Erläuterung der Transportwege von Film und Papier und

Fig. 8 eine Darstellung analog Fig. 1 einer leicht modifizierten erfindungsgemässen Laboreinrichtung.

Die in den Figuren dargestellte Laboreinrichtung umfasst einen Printer (Belichtungsvorrichtung) P, einen Papierprozessor (Entwicklungs- und Trocknungsvorrichtung für das Kopiermaterial) PP, einen Filmprozessor (Entwicklungs- und Trocknungsvorrichtung für fotographische Filme) FP, einen Sortiertisch ST und einen Filmförderer FF. Der Printer P und Papierprozessor PP sind beispielsweise vom selben Typ wie die entsprechenden Komponenten der unter der Bezeichnung «Compact lab. 3320: der Anmelderin bekannten Laboreinrichtung. Der Filmprozessor FP kann z.B. der unter der Bezeichnung 204B von der Firma FC Japan erhältliche Typ sein. Der Filmförderer FF ist irgendeine konventionelle Fördervorrichtung, die dazu geeignet ist, die entwickelten Filme vom Filmprozessor FP in Griffnähe der Bedienungsperson des Printers P zu transportieren.

Die drei Hauptkomponenten der gezeigten Laboreinrichtung, nämlich der Printer P, der Papierprozessor PP und der Filmprozessor FP sind innerhalb eines im wesentlichen rechteckigen Grundrisses L-förmig zu einer kompakten baulichen Einheit zusammengefügt. Durch die erfindungsgemässe L-förmige Anordnung nach Anspruch 1 bleibt hinter dem Printer P ein Hohlraum H frei. Dieser Hohlraum, der durch den Printer P und die beiden Prozessoren PP und FP einerseits und durch eine mit einer Türe T versehene Rückwand R und eine Seitenwand W anderseits begrenzt ist, bildet einen in die erfindugsgemässe Laboreinrichtung integrierten, begehbaren Dunkelraum, der für verschiedene Zwecke benutzt werden kann.

Der Printer P und die beiden Prozessoren PP und FP sind so angeordnet, dass alle ihre Zugänge bzw. Eingänge für lichtempfindliches Fotomaterial in den Hohlraum H münden bzw. von diesem aus zugänglich sind. Auf diese Weise ist es z.B. auch bei Tageslicht problemlos möglich, die unentwickelten Vorlagenfilme in den Filmprozessor FP einzuführen oder den Printer P mit lichtempfindlichem Kopierpapier zu beladen. Ferner ist es z.B. auch möglich, im Hohlraum H ein Vergrösserungsgerät V für Papierformate, die vom Printer P nicht bearbeitet werden können, vorzusehen und das belichtete Fotopapier vom Hohlraum H aus manuell über einen gesonderten Eingang I in den Papierprozessor PP einzugeben.

Der Hohlraum H muss nicht unbedingt allseitig geschlossen sein. Wenn die Laboreinrichtung als Ganzes an einer Wand aufgestellt wird, kann die Seitenwand W oder die Rückwand R des Labors natürlich auch entfallen. Selbstverständlich muss irgendwie für eine Zutrittsmöglichkeit zum Hohlraum H gesorgt sein. Gemäss Fig. 8 kann der Hohlraum H ferner auch durch zwei Zusatzwände ZW in Verbindung mit einer Gebäudewand GW vergrössert sein, wobei selbstverständlich auch noch zahlreiche andere Konfigurationen möglich sind.

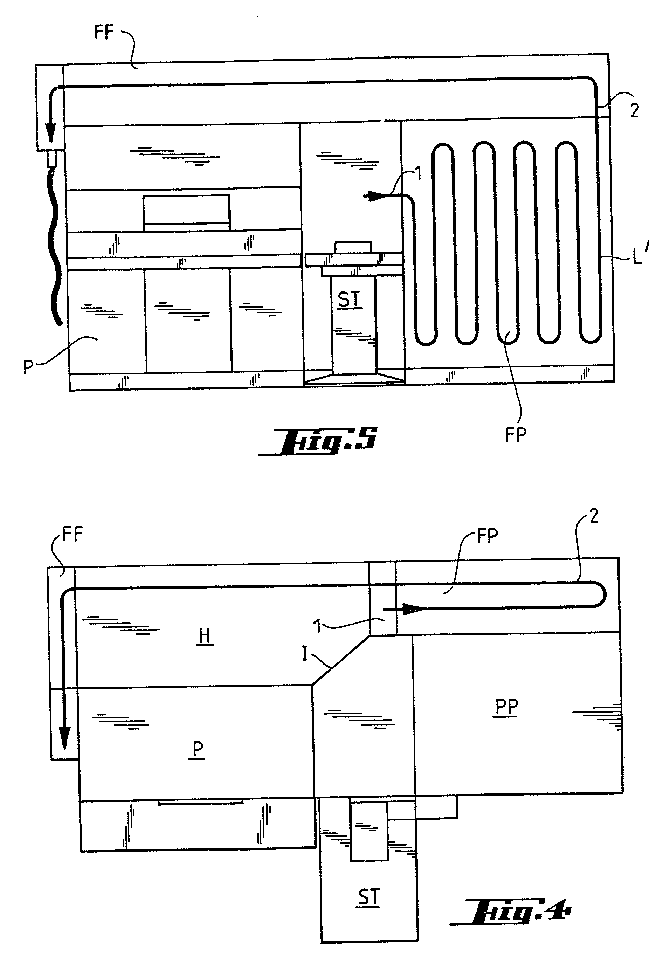

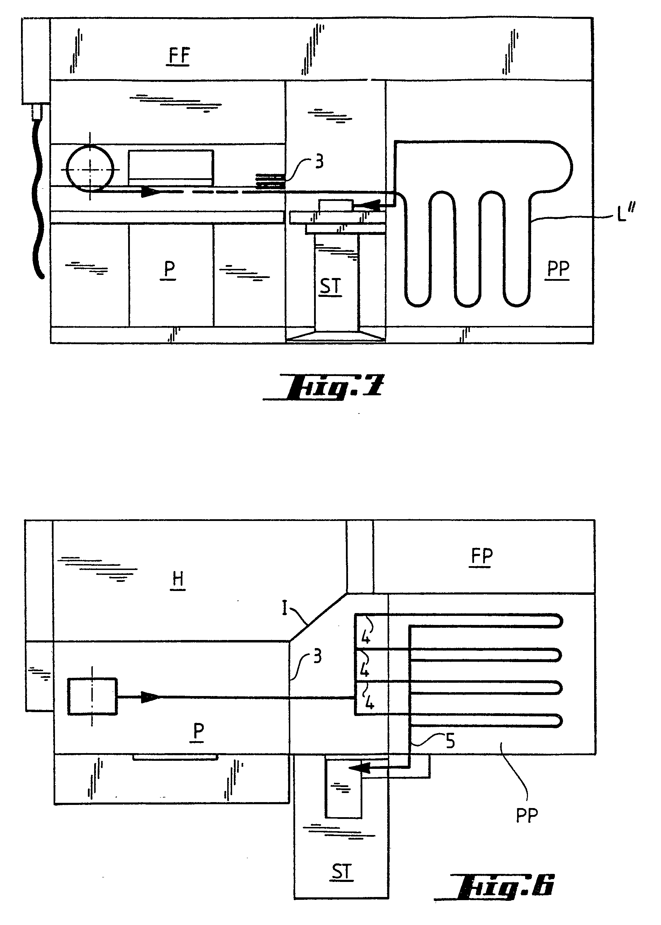

Im Betrieb werden die belichteten Vorlagenfilme bei 1 (Fig. 4) in den Filmprozessor FP eingeführt. Sie durchlaufen diesen in einer mäanderförmigen Bahn und verlassen ihn bei 2, um von der Filmfördervorrichtung FF an Klammern hängend an die linke Seite des Printers P transportiert zu werden. Die Bedienungsperson legt dann Film für Film in den Printer P ein und nimmt die erforderlichen Belichtungen vor. Das belichtete Fotopapier wird im Printer blattweise abgeschnitten und gelangt bei 3 automatisch in den Papierprozessor PP, wo es zunächst auf vier parallele Bahnen 4 verteilt und dann durch die diversen Bäder und die Trocknungszone transportiert wird (Fig. 6). Bei 5 werden die einzelnen Papierblätter wieder in eine gemeinsame Transportbahn zusammengeführt und verlassen den Papierprozessor PP, um über eine nicht näher dargestellte Fördervorrichtung zum Sortiertisch ST zu gelangen, wo dann die übliche Endbearbeitung der Kopieraufträge stattfindet.

Die beschriebene Laboreinrichtung umfasst also sämtliche für die Abwicklung eines Kopierauftrags erforderlichen Vorrichtungen, und zwar in einer raumsparenden und ergonomisch äusserst zweckmässigen gegenseitigen Anordnung. Durch die Anordnung von sowohl Papier- als auch Filmprozessor in einem Gerät besteht ferner die Möglichkeit, den konstruktiven Aufwand insofern zu senken, als z.B. gemeinsame Antriebe, Temperaturregelungen und sonstige Steuerungen für beide Prozessoren vorgesehen sein können. Die integrierte Dunkelkammer erleichtert schliesslich auch noch die Behebung von allfälligen Störungen des Printers, da dieser dann vom Dunkelraum aus ohne weiteres geöffnet werden kann.

## Patentansprüche

1. Laboreinrichtungen zur Herstellung von fotografischen Kopien mit einer Entwicklungsvorrichtung (EP) für fotografische Filme, einer Belichtungsvorrichtung (Printer) (P) für fotografisches Kopierpapier und einer an die Belichtungsvorrichtung angeschlossenen Entwicklungs- und Trocknungsvorrichtung (PP) für Kopierpapier, dadurch gekennzeichnet, dass diese drei Vorrichtungen (P, FP, PP) so zu einer baulichen Einheit zusammengeschlossen sind, dass entwickelte Filme aus der Filmentwicklungsvorrichtung (FP) an der Belichtungsvorrichtung (P) ausgegeben werden, und dass diese drei Vorrichtungen im wesentlichen L-förmig so um einen als begehbaren Dunkelraum ausgebildeten Hohlraum (H) angeordnet sind, dass die Beschickungseingänge für lichtempfindliches Fotomaterial der Filmentwicklungsvorrichtung (FP) und der Belichtungsvorrichtung (P) in diesen Hohlraum münden bzw. von diesem aus zugänglich sind.

2. Einrichtungen nach Anspruch 1, dadurch gekennzeichnet, dass die drei Vorrichtungen (P, FP, PP) zusammen mit dem Hohlraum (H) auf einem im wesentlichen rechteckigen Grundriss aufgebaut sind.

3. Einrichtungen nach Anspruch 1 oder 2, dadurch gekennzeichnet, dass die Entwicklungs- und Trocknungsvorrichtung (PP) mit einem separaten, vom Hohlraum (H) aus zugänglichen Eingang (I) für belichtetes Kopierpapier versehen ist.

4. Einrichtung nach einem der Ansprüche 1–3, dadurch gekennzeichnet, dass im Dunkelraum (H) ein Vergrösserungsgerät (V) für in der Belichtungsvorrichtung (P) nicht verarbeitbare Papierformate vorgesehen ist.

5. Einrichtungen nach einem der vorangehenden Ansprüche, dadurch gekennzeichnet, dass an die Filmentwicklungsvorrichtung (FP) eine Fördervorrichtung (FF) angeschlossen ist, welche entwickelte Filme zur Belichtungsvorrichtung (P) in Griffnähe der Bedienungsperson der letzteren transportiert.

6. Einrichtungen nach einem der vorangehenden Ansprüche, dadurch gekennzeichnet, dass sie einen Sortiertisch (ST) für die Auftragsendverarbeitung sowie eine Fördereinrichtung zum Transport des entwickelten Kopierpapiers zum Sortieren aufweist.

7. Einrichtung nach einem der vorangehenden Ansprüche, dadurch gekennzeichnet, dass – von der Bedienungsseite gesehen – die Belichtungsvorrichtung (P) links vorne, die Papierentwicklungs- und Trocknungsvorrichtung (PP) rechts vorne, die Filmentwicklungsvorrichtung (FP) rechts hinten und der Hohlraum (H) links hinten angeordnet sind.

## Claims

1. Laboratory apparatus for the production of photographic copies, with a developing device (FP) for photographic films, an exposure device (printer) (P) for photographic copy paper and a developing and drying device (PP) for copy paper connected to the exposure device, charcterised in that said three devices (P, FP, PP) are combined into a constructive unit in such a way that developed films are delivered from the film developing device (FP) to the exposure device (P) and that said three devices are substantially arranged in an L-shape about a cavity (H) formed as an accessible darkroom in such a way that the feeder inlets for lightsensitive photographic material of the film developing device (FP) and the exposure device (P) open into said cavity or are accessible therefrom.

2. Apparatus according to Claim 1, characterised in that the three devices (P, FP, PP) together with the cavity (H) are constructed on an substantially rectangular ground plan.

3. Apparatus according to Claims 1 or 2, characterised in that the developing and drying device (PP) is provided with a separate inlet (I) accessible from the cavity (H) for exposed copy paper.

4. Apparatus according to one of Claims 1 to 3, characterised in that an enlarger device (V) for paper formats which cannot be processed by said exposure device (P) is provided in the darkroom (H).

5. Apparatus according to one of the preceding Claims, characterised in that a conveyor device (FF) is connected to said film developing device (FP) which transports developed films to said exposure device (P) to be within reach of the operator thereof.

6. Apparatus according to one of the preceding Claims, characterised in that it has a sorting table (ST) for the final processing of orders and a conveyor device for the transport of the developed copy paper to said sorting table.

7. Apparatus according to one of the preceding Claims, characterised in that, as viewed from the operating side, said exposure device (P) is located in front to the left, said paper developing and drying device (PP) in front to the right, said film developing device (FP) at the rear to the right and said cavity (H) at the rear to the left.

## Revendications

1. Appareils constituant des laboratoires destinés à la production de copies photographiques, ces appareils comportant un dispositif (FP) de développement pour films photographiques, un dispositif (P) de tirage («Printer») pour l'exposition du papier de copie photographique et un dispositif (PP) de développement et de transport de papier de copie faisant suite au dispositif d'exposition, appareils caractérisés en ce que ces trois dispositifs (P, FP, PP) sont rassemblés pour former une unité modulaire de construction, de telle façon que les films développés sortant du dispositif (FP) de développement sont délivrés au dispositif (P) d'exposition et en ce que ces trois dispositifs sont sensiblement en forme de L autour d'un espace vide ou creux (H) conformé en chambre noire accessible, en ce que les entrées de chargement des matériaux photosensibles dans le dispositif (FP) de développement de film et dans le dispositif (P) d'exposition débouchent dans cet espace creux (H), ou bien sont accessibles à partir de ce dernier.

2. Appareils constituant des laboratoires selon la revendication 1, caractérisés en ce que les trois dispositifs (P, FP, PP) sont installés avec l'espace creux (H) sur une surface de base sensiblement rectangulaire.

3. Appareils selon la revendication 1 ou 2, caractérisés en ce que le dispositif (PP) de développement et de séchage est muni d'une entrée (I) séparée, accessible à partir de l'espace vide (H) et destinée au papier copie impressionné.

4. Appareil selon l'une des revendications 1 à 3, caractérisé en ce qu'on prévoit dans la chambre noire (H) un appareil (V) d'agrandissement pour les formats de papier qui ne peuvent pas être traités dans le dispositif (P) d'exposition.

5. Appareils selon l'une des revendications précédentes, caractérisés en ce qu'un dispositif (FF) de transport accolé au dispositif (FP) de développement transporte les films développés jusqu'au dispositif (P) d'exposition pour les faire parvenir dans la zone où l'opérateur peut les saisir.

6. Appareils selon l'une des revendications précédentes, caractérisé en ce qu'ils présentent une table (ST) de tri, destinée au traitement final des commandes, ainsi qu'un dispositif pour transporter jusqu'à la table de tri le papier copie développé.

7. Appareils selon l'une des revendications précédentes, caractérisés en ce que, vu par l'opérateur, le dispositif (P) d'exposition est disposé en avant à gauche, le dispositif (PP) de développement et de séchage de papier en avant à droite, le dispositif (FP) de développement de film en arrière à droite et l'espace creux (H) en arrière à gauche.

0 136 979

Fig.2

Fig.1

5

FF

H

W

P

ST

PP

Fig.3

*Fig.5*

*Fig.4*

**Fig.7**

**Fig.6**

Fig. 8